# EUROPÄISCHE PATENTSCHRIFT

(11) **EP 3 192 414 B1**
(45) Veröffentlichungstag und Bekanntmachung des Hinweises auf die Patenterteilung: **19.12.2018**
(21) Anmeldenummer: 16173646.7
(22) Anmeldetag: 09.06.2016
(51) Int. Cl.: A47J 42/40

(54) **KAFFEEBOHNEN-MAHLWERK FÜR KAFFEEZUBEREITUNGSVORRICHTUNG SOWIE KAFFEEZUBEREITUNGSVORRICHTUNG**
COFFEE BEAN GRINDER FOR PREPARING COFFEE AND DEVICE FOR PREPARING COFFEE
BROYEUR DE GRAINS DE CAFE POUR DISPOSITIF DE PREPARATION DE CAFE ET DISPOSITIF DE PREPARATION DE CAFE

(30) Priorität: 12.01.2016 DE 102016100396
(43) Veröffentlichungstag der Anmeldung: 19.07.2017
(73) Patentinhaber: Eugster/Frismag AG, 8580 Amriswil (CH)
(72) Erfinder: EICHER, Heinz, 8645 Jona (CH)
(74) Vertreter: Patentanwälte Behrmann Wagner PartG mbB

(56) Entgegenhaltungen:
- EP-A1- 2 050 377
- EP-A1- 2 524 636
- EP-B1- 1 964 498

## Beschreibung

Die Erfindung betrifft ein Kaffeebohnen-Mahlwerk (im Folgenden Mahlwerk) gemäß dem Oberbegriff des Anspruchs 1 für eine Kaffeezubereitungsvorrichtung, insbesondere einen Kaffeevollautomaten, zum Mahlen von Kaffeebohnen zu Kaffeemehl mit einem ersten und einem zweiten Mahlelement, die mittels eines, insbesondere elektromotorischen Antriebs relativ zueinander um eine Drehachse verdrehbar sind und mit einer eine Oberseite und eine entlang der Drehachse davon beabstandete Unterseite aufweisenden Auswerferscheibe (Mitnehmerscheibe), mit der gemahlenes Kaffeemehl aus dem Mahlwerk austragbar ist, wobei das erste Mahlelement auf einer oberen, stirnseitigen Aufsitzfläche der Auswerferscheibe aufsitzt, die radial außen von einer durch sich in Umfangsrichtung erstreckenden Kante begrenzt ist, und wobei die Auswerferscheibe einen, bevorzugt ausgehend von der sich in Umfangsrichtung erstreckenden Kante, nach radial außen bis zu einer äußeren Umfangskante der Auswerferscheibe abfallenden Randbereich aufweist, auf dem mehrere in Umfangsrichtung beabstandete Auswerferflügel angeordnet sind. Die Auswerferflügel erstrecken sich in radialer Richtung nach innen bis zu der die Aufsitzfläche begrenzenden Kante, wobei eine sich von einem radial äußeren Ende bis zu einem radial inneren Ende eines jeweiligen Auswerferflügels erstreckende Auswerferflügeloberseite in einer Radialebene liegt, welche die sich in Umfangsrichtung erstreckenden Kante aufnimmt. Das bedeutet, dass radial zwischen der durch sich in Umfangsrichtung erstreckenden Kante und den Auswerferflügeln kein Abstand vorgesehen ist.

Ferner betrifft die Erfindung eine Kaffeezubereitungsvorrichtung, insbesondere einen Kaffeevollautomaten mit einem integrierten Kaffeebohnen-Mahlwerk gemäß Anspruch 12.

Aus der EP 2 764 808 B1 ist ein Mahlwerk zum Einsatz in Kaffeemaschinen bekannt, dessen dort als Mitnehmerscheibe bezeichnete Auswerferscheibe sich durch einen konkav gewölbten Randbereich auszeichnet. Auf diesem Randbereich sitzen insgesamt neun gleichmäßig in Umfangsrichtung verteilt angeordnete Auswerfer- bzw. Mitnehmerflügel, die sich geradlinig jeweils auf einer Radialen von radial außen nach radial innen erstrecken und mit Radialabstand zu einer sich in Umfangsrichtung erstreckenden Kante enden, die eine stirnseitige, obere Aufsitzfläche der Auswerferscheibe für einen Mahlkegel radial außen begrenzt. Als nachteilig wird empfunden, dass sich in einem Bereich radial innerhalb der Auswerferflügel Kaffeemehl ansammeln kann, welches sich nur schwer in radialer Richtung nach außen austragen lässt. Darüber hinaus kann sich auch in Umfangsrichtung von der Auswerferscheibe mitgenommenes Kaffeemehl seitlich der Aufwerferflügel ansammeln, insbesondere in dem konkaven Randbereich, welcher sich naturgemäß in einem radial äußeren Bereich abflacht.

Eine alternative Auswerferscheibe ist in der DE 44 18 139 C1 beschrieben. Hier sind eine Vielzahl von Auswerferflügeln in einem radial äußeren Randbereich des nach radial außen flach abfallenden Randbereichs angeordnet. Hier ist die Mitnahmefunktion der Auswerferflügel begrenzt. Darüber hinaus kann sich auch hier seitlich sowie in einem Bereich radial innen an den Auswerferflügeln Kaffeemehl anstauen.

Aus der fachfremden EP 1 964 498 B1, die eine Gewürzmühle beschreibt, ist eine Auswerferscheibe bekannt, bei der acht Auswerferflügel mit Radialabstand zur Aufsitzfläche für einen Mahlkegel begrenzenden durch sich in Umfangsrichtung erstreckenden Kante enden, so dass die Mitnehmerfunktion begrenzt und zudem für zerkleinerte Gewürze eine Staumöglichkeit gegeben ist. Die Auswerferflügel verlaufen tangential zu der sich in Umfangsrichtung erstreckenden Kante.

Aus der DE 814 505 B ist eine Kaffeemühle mit radial benachbart zu einer Mahlscheibe vorgehsehenen Abstreiferflügeln bekannt.

Die DE 85 03 549 U1 beschreibt eine Haushaltsgetreidemühle mit seitlich an einem Mahlstein angeordneten Flügelleisten.

Die EP 2 050 377 A1 offenbart ein Mahlwerkzeug der eingangs genannten Art, wobei sie eine zum Sammel und Auswerfen gemahlenen Kaffees durch eine Rotationsbewegung ein Flügelrad aufweist. Das Flügelrad weist eine umfangsseitige Konusfläche auf, welche mit einer Drehachse des Flügelrads einen Konuswinkel von 12° aufspannt. An der Konusfläche sind sechs Flügel gleichmäßig um die Drehachse angeordnet. Die Flügel erstrecken sich jeweils radial bezogen auf die Drehachse.
Ausgehend von dem vorgenannten Stand der Technik liegt der Erfindung die Aufgabe zugrunde, ein Kaffeebohnen-Mahlwerk für eine Kaffeezubereitungsvorrichtung sowie eine ein solches Kaffeebohnen-Mahlwerk umfassende Kaffeezubereitungsvorrichtung, insbesondere einen Kaffeevollautomaten anzugeben, wobei eine möglichst weitgehende Entleerung des Kaffeebohnen-Mahlwerks nach einem Mahlvorgang durch die Auswerferscheibe sichergestellt ist.

Diese Aufgabe wird mit einem Mahlwerk mit den Merkmalen des Anspruchs 1 gelöst, d.h. bei einem gattungsgemäßen Kaffeebohnen-Mahlwerk dadurch, dass ein radial äußeres Ende und ein radial inneres Ende eines jeweiligen Auswerferflügels in Umfangsrichtung um einen Umdrehungswinkel von mindestens 5° versetzt angeordnet sind.

Hinsichtlich der Kaffeezubereitungsvorrichtung wird die Aufgabe mit den Merkmalen des Anspruchs 12 gelöst.

Vorteilhafte Weiterbildungen der Erfindung sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die Auswerferflügel verglichen mit Stand der Technik-Lösungen nach radial innen zu verlängern derart, dass die sich von radial außen nach radial innen erstreckenden Auswerferflügel nicht mit Abstand zu der die Aufsitzfläche radial außen begrenzenden und sich in Umfangsrichtung erstreckenden Kante enden, sondern sich bis zu dieser hin erstrecken, so dass in einem Bereich radial zwischen den Auswerferflügeln und der sich in Umfangsrichtung erstreckende Kante kein Rückstauraum für Kaffeemehl gebildet wird. Neben der Reduzierung von Totraum (Stauraum), in welchem Kaffeemehl zurückbleiben kann, wird durch die erfindungsgemäße Ausgestaltung der Auswerferflügel deren Mitnahme- bzw. Auswerferfunktion verbessert, da sie sich erfindungsgemäß nun nicht nur über einen Radialabschnitt sondern über den gesamten in radialer Richtung nach außen abfallenden Randbereich erstrecken.

Die sich in Umfangsrichtung erstreckende Kante ist in einem Bereich zwischen jeweils zwei in Umfangsrichtung benachbarten Auswerferflügeln sichtbar. Besonders zweckmäßig ist es, wenn jedoch die Auswerferflügel kantenfrei in die Aufsitzfläche übergehen - in diesem Fall ist die sich in Umfangsrichtung erstreckende Kante nicht umlaufend, sondern durch die Auswerferflügel unterbrochen. Bei einer Ausführungsvariante, bei der sich die Auswerferflügel über die Aufsitzfläche nach oben hinaus erstrecken, kann die sich in Umfangsrichtung erstreckende Kante als umlaufende Kante ausgebildet sein.

Die Auswerferflügel erstrecken sich, insbesondere ausgehend von der schräg nach unten, d.h. entlang der Drehachse in Richtung Unterseite abfallenden Randbereichsoberseite (Rutschfläche für Kaffeemehl) entlang der Drehachse nach oben, wobei es hinsichtlich des Maßes der Erstreckung der Auswerferflügel nach oben unterschiedliche Realisierungsformen gibt. Gemäß eines nicht geschützten Beispiels ist es möglich, dass sich die Auswerferflügel in der Hochrichtung, d.h. entlang der Drehachse nach oben über diese Radialebene hinaus erstrecken, insbesondere mit einem radial äußeren Abschnitt. Grundsätzlich ist auch ein drittes nicht geschütztes Beispiel umsetzbar, bei der die Auswerferflügel sich abschnittsweise nicht bis zu der die sich in Umfangsrichtung erstreckende Kante aufnahmenden Radialebene erstrecken, d.h. abschnittsweise, insbesondere mit einem radial äußeren Bereich unterhalb bzw. mit Abstand zu der Radialebene enden. Unabhängig von der konkreten Ausführungsvariante ist es jedoch wesentlich, dass sich die Auswerferflügel in der vorerwähnten Hochrichtung über die gesamte Radialerstreckung des Randbereichs über die Rutschfläche des Randbereichs, d.h. dessen Oberfläche entlang der Drehachse nach oben erheben, um somit ihre Mitnehmerfunktion in Umfangsrichtung über die gesamte Radialerstreckung bis zur durch sich in Umfangsrichtung erstreckenden Kante zu erfüllen. Bevorzugt ist, wie später noch erläutert werden wird die erstgenannte Variante bzw. Alternative, bei der die Oberseite der Auswerferflügel in einer die umlaufende Kante aufnehmenden Radialebene liegt und somit bevorzugt auch in einer Ebene mit der Aufsitzfläche.

Ganz besonders bevorzugt ist eine Ausführungsvariante des erfindungsgemäßen Mahlwerks, bei der eine von dem Randbereich abgewandte Auswerferflügeloberseite (insbesondere jedes Auswerferflügels), ggf. abgesehen von einem radial äußeren Krümmungsradius im Übergang zu der sich in Hochrichtung erstreckenden radial äußeren Umfangsseite, über ihre gesamte Radialerstreckung von einem radial äußeren Ende bis zu einem radial inneren Ende in einer die sich in Umfangsrichtung erstreckende Kante aufnehmenden Radialebene liegt. Eine solche Ausführungsform ist von besonderem Vorteil in Kombination mit einer später noch zu erläuternden, unteren bzw. der Auswerferflügeloberseite axial entlang der Drehachse gegenüberliegenden Abstreiferfläche, die für ein weitgehendes Abscheren von etwaigen auf die Auswerferflügeln gelangendes Kaffeemehl Sorge trägt.

Wie eingangs erwähnt, begrenzt die sich in Umfangsrichtung erstreckende Kante die bevorzugt ringförmige Auswerferscheibe in radialer Richtung nach außen. Als besonders vorteilhaft hat es sich nun im Hinblick auf die Vermeidung von Tot- bzw. Ablagerräumen für Kaffeemehl erwiesen, wenn sich das erste Mahlelement radial bis zu der sich in Umfangsrichtung erstreckenden Kante erstreckt, d.h. nicht mit Radialabstand innerhalb dieser Kante endet. Dabei ist es grundsätzlich möglich und bevorzugt, wenn das erste Mahlelement, insbesondere ein Mahlkegel, in radialer Richtung mit der sich in Umfangsrichtung erstreckenden Kante abschließt, d.h. dass sich das erste Mahlelement in radialer Richtung genau bis zu der Kante erstreckt. Gemäß einer alternativen, ebenfalls realisierbaren Ausführungsvariante überragt das erste Mahlelement die sich in Umfangrichtung erstreckenden Kante, insbesondere ein Stück weit, d.h. ein wenig, in radialer Richtung nach außen, insbesondere derart, dass das erste Mahlelement mit seinem radial äußeren Randbereich auf den bis zur sich in Umrichtung erstreckenden Kante nach radial innen reichenden Auswerferflügeln aufliegt.

Ganz besonders bevorzugt ist es, wenn die, bevorzugt eine Ringfläche umfassende oder als Ringfläche ausgebildete, Aufsitzfläche für das erste Mahlelement eine sich senkrecht zur Drehachse erstreckende Radialebene definiert, d.h. über ihre Flächenerstreckung in der von der sich in Umfangsrichtung erstreckenden Kante definierten Radialebene liegt und bevorzugt nach radial außen übergangslos, d.h. stufen- und kantenfrei in die Auswerferflügel übergeht.

Um eine besonders gute Entleerung des Randbereichs der Auswerferscheibe sicherzustellen ist es bevorzugt, wenn dieser steil entlang der Drehachse nach unten abfällt. Dabei hat es sich besonders zweckmäßig herausgestellt, wenn der Randbereich nicht konkav gewölbt ist, sondern von einer Konusfläche gebildet wird, die besonders bevorzugt mit der Drehachse einen Konuswinkel von mindestens 30° aufspannt, bevorzugt einen Konuswinkel zwischen 30° und 80°. Der Konuswinkel α wird dabei gemessen zwischen der Konusfläche und der nach unten verlängerten Drehachse, also in einem Bereich unterhalb der Konusfläche.

In Weiterbildung der Erfindung ist mit Vorteil vorgesehen, dass die Anzahl der, bevorzugt gleichmäßig in Umfangsrichtung verteilt angeordneten Auswerferflügel im Vergleich zum Stand der Technik möglichst gering gehalten wird, um möglicht wenig Platz auf die Auswerferflügel zu verwenden und mehr Rutschfläche im Randbereich zur Verfügung zu stellen. Darüber hinaus wurde festgestellt, dass bei einer geringen Anzahl von Auswerferflügeln deren Mitnahmeeigenschaft in Bezug auf Kaffeemehl verbessert wird. Somit wird in Weiterbildung der Erfindung vorgeschlagen, dass die Anzahl der Auswerferflügel kleiner oder gleich fünf ist. Bevorzugt beträgt die Zahl drei.

Optimale Auswerfergebnisse werden erzielt, wenn die Auswerferscheibe nicht ortsfest angeordnet ist, sondern sich zusammen mit einem rotierenden Mahlelement, insbesondere dem ersten Mahlelement rotiert. Hierzu ist in Weiterbildung der Erfindung mit Vorteil vorgesehen, dass das, vorzugsweise von einem Mahlkegel gebildete, erste Mahlelement drehfest auf der Auswerferscheibe angeordnet ist, welche wiederum von dem, insbesondere elektromotorischen Antrieb, insbesondere ein dazwischen angeordnetes Untersetzungsgetriebe antreibbar ist.

Besonders zweckmäßig ist es nun, wenn sich die Auswerferflügel nicht wie bei bekannten integralen Kaffeebohnen-Mahlwerken von Kaffeemaschinen geradlinig, d.h. auf jeweils einer Radialen von radial außen nach radial innen erstrecken, sondern wenn sich die Auswerferflügel, beispielsweise geradlinig oder alternativ auch gekrümmt von radial außen nach radial innen in Umfangsrichtung erstrecken, d.h. bezogen auf eine Radiale zur Drehachse geneigt bzw. schräg angeordnet sind. Dabei ist es ganz besonders von Vorteil, wenn sie sich ausgehend von radial außen nach radial innen in einer festgelegten Umdrehungsrichtung der Auswerferscheibe bei einer Drehmomentbeaufschlagung durch den Antrieb erstrecken, derart, dass das jeweilige radial äußere Ende bei einer Drehung der Auswerferscheibe einem jeweiligen radial inneren Ende nacheilt.

Insgesamt ist es vorteilhaft, wenn diese schräge Anordnung zur Radialen derart realisiert ist, dass ein radial äußeres Ende jedes Auswerferflügels in Umfangsrichtung um einen Umdrehungswinkel um mindestens 10° von einem radial inneren Ende des jeweiligen Auswerferflügels versetzt angeordnet ist. Ganz besonders zweckmäßig ist es, wenn der Versatz zwischen äußerem Ende und innerem Ende der Auswerferflügel so gewählt ist, dass diese sich tangential zu der sich in Umfangsrichtung erstreckenden und die Aufsitzfläche nach radial außen begrenzenden Kante erstrecken.

Wie bereits angedeutet ist eine Ausführungsvariante des Mahlwerks von besonderem Vorteil, bei der den Auswerferflügeln eine Abstreiferfläche zugeordnet ist, wobei diese Ausführungsform besonders bevorzugt ist mit einer Variante, bei der sich die Auswerferflügeloberseite zumindest abschnittsweise, vorzugsweise über ihre gesamte Radialerstreckung in einer die sich in Umfangsrichtung erstreckenden Kante und/oder die Aufsitzfläche aufnehmenden Radialebene befindet. Durch das Vorsehen einer entsprechenden Abstreiferfläche kann etwaiges auf die Auswerferflügeloberseite gelangendes Kaffeemehl abgestriffen bzw. abgeschert werden. Hierzu ist es besonders zweckmäßig, wenn der Abstand zwischen Abstreiferfläche und Auswerferflügeloberseite gering ist, insbesondere weniger als 2 mm, besonders bevorzugt weniger als 1 mm beträgt.

Die Erfindung führt auch auf eine Kaffeezubereitungsvorrichtung, insbesondere einen Kaffeevollautomaten, umfassend eine Brühgruppe bzw. Brüheinheit mit einer Brühkammer und ein zuvor beschriebenes, nach dem Konzept der Erfindung ausgebildetes Kaffeebohnen-Mahlwerk, das derart angeordnet ist, dass das von der Auswerferscheibe nach radial außen transportierte Kaffeemehl in Richtung zu einer Brühkammer gelangen kann, d.h. geführt ist.

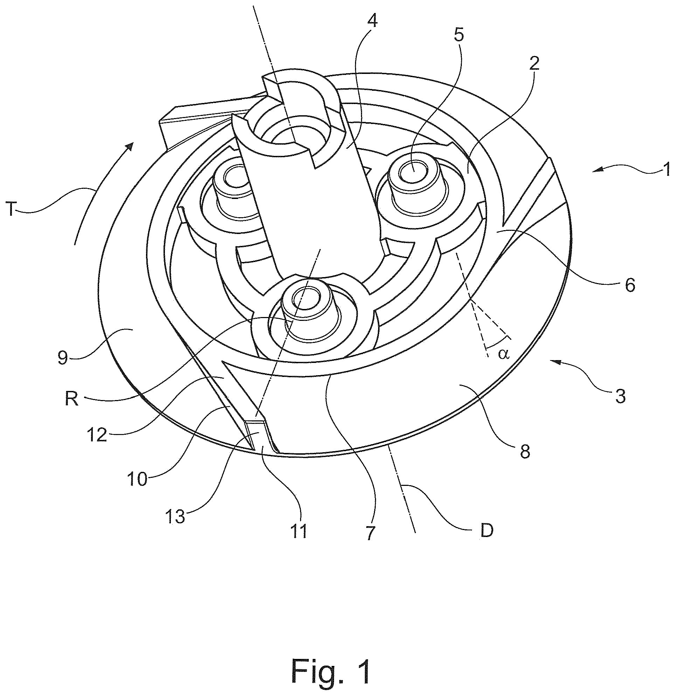

Weitere Vorteile, Merkmale und Einzelheiten der Erfindung ergeben sich aus der nachfolgenden Beschreibung eines bevorzugten Ausführungsbeispiels sowie anhand der einzigen Figur 1.

In Fig. 1 ist eine Auswerferscheibe 1 eines ansonsten nicht näher dargestellten Kaffeebohnen-Mahlwerks gezeigt. Die Auswerferscheibe 1 dient zum radialen Austragen von Kaffeemehl aus einem Kaffeebohnenmahlwerk und kann prinzipiell, beispielsweise wie in der Fig. 1 der EP 2 764 808 B1 gezeigt, anstelle der dort vorgesehenen Mitnehmerscheibe in ein Kaffeebohnen-Mahlwerk unterhalb der Mahlelemente integriert werden, so dass das aus dem von den Mahlelementen begrenzten Mahlspalt herauskommende Kaffeemehl von der Auswerferscheibe in radialer Richtung, insbesondere zu einem zur Brühkammer führenden Kanal abtransportiert werden.

Die nach dem Konzept der Erfindung ausgebildete Auswerferscheibe 1 weist eine den Mahlelementen zugewandte Oberseite 2 und eine entlang einer Drehachse D von der Oberseite 2 abgewandte Unterseite 3 auf. Auf der Oberseite 2 befindet sich koaxial ein langgestreckter Axialfortsatz 4 (Abtriebselement), mit welchem die Auswerferscheibe im montierten Zustand in ein erstes Mahlelement, hier einen Mahlkegel ragt oder diesen ggf. durchsetzt. An dem Axialfortsatz 4 kann in an sich bekannter Weise eine Einzugsschnecke festgelegt werden.

Rund um den Axialfortsatz 4 sind drei gleichmäßig in Umfangsrichtung verteilt angeordnete Dome 5 vorgesehen, die im montierten Zustand Federn einer Rutschkupplung tragen zum drehfesten Verbinden bzw. Kuppeln mit dem ersten Mahlelement.
Die Auswerferscheibe 1 weist auf ihrer Unterseite nicht gezeigte Mitnehmermittel auf, in die die letzte Getriebestufe eines nicht gezeigten Untersetzungsgetriebes eingreift, um die Auswerferscheibe 1 und damit das erste Mahlelement relativ zu einem zweiten Mahlelement um die Drehachse D in die Drehrichtung T zu rotieren.

Auf der Oberseite 2 befindet sich mit Radialabstand zu dem Axialfortsatz 4 eine ringförmige Aufsitzfläche 6 für das erste Mahlelement. Die ringförmige Aufsitzfläche 6 wird radial außen begrenzt von einer sich in Umfangsrichtung erstreckenden Kante 7. Das erste Mahlelement endet gemäß einer ersten Ausführungsvariante in radialer Richtung an dieser Kante 7 oder überragt diese alternativ ein Stück weit, insbesondere weniger als 4mm, bevorzugt weniger als 3mm in radialer Richtung nach außen.

Radial außerhalb der sich in Umfangsrichtung erstreckenden Kante 7 befindet sich ein Randbereich 8, der vorliegend konisch konturiert ist, d.h. entlang der Drehachse D in Richtung Unterseite 3 abfällt. Der Randbereich 8 weist hierzu eine konische Rutschfläche 9 auf, über welche sich entlang der Drehachse D in einer Hochrichtung drei gleichmäßig in Umfangsrichtung verteilt angeordnete Auswerferflügel 10 erheben. Diese erstrecken sich von einer radial äußeren Umfangskante 11 der Auswerferscheibe 1 in radialer Richtung nach innen bis hin zur umlaufenden Kante 7. In dem konkreten Ausführungsbeispiel ist zu erkennen, dass eine Auswerferflügeloberseite 12 sich bis auf einen minimalen radial äußeren Krümmungsradius 13 über ihre gesamte Radialerstreckung in einer gemeinsamen Radialebene mit der sich in Umfangsrichtung erstreckenden Kante 7 und der Aufsitzfläche 6 befindet.

Bemerkenswert ist, dass die Auswerferflügel 10 nicht geradlinig in radialer Richtung verlaufen, wie dies bei Auswerferscheiben für integrierte Kaffeebohnen-Mahlwerke von Kaffeezubereitungsvorrichtungen üblich ist, sondern bezogen auf eine jeweilige Radiale R geneigt bzw. gekrümmt sind. Vorliegend haben die Auswerferflügel 10 betrachtet von radial außen nach radial innen einen geradlininigen, Verlauf, schließen jedoch mit der jeweiligen Radialen R einen Winkel ein, der in dem konkreten und bevorzugten Ausführungsbeispiel so gewählt ist, dass die Auswerferflügel 10 jeweils eine Tangentiale zur sich in Umfangsrichtung erstreckenden Kante 7 bilden. Zu erkennen ist auch, dass in der Drehrichtung T die radial äußeren Enden der Auswerferflügel 10 dem jeweiligen zugehörigen radial inneren Ende nacheilen.

Die gezeigte Auswerferscheibe 1 hat im Kontext eines Kaffeebohen-Mahlwerks erhebliche Vorteile. So existiert kein Zwischenraum zwischen der sich in Umfangsrichtung erstreckenden Kante 7 und den Auswerferflügeln 10, so dass sich hier kein Kaffeemehl ablagern kann. Darüber hinaus ist die Anzahl der Auswerferflügel 10 verglichen mit dem Stand der Technik deutlich reduziert und beträgt hier nur drei Stück, die sich jedoch über die gesamte Radialerstreckung des nach unten geneigten Randbereichs 8 erstrecken und somit ihre volle Auswerferfunktion über die gesamte Radialerstreckung des Randbereichs erfüllen können. Somit steht auch eine maximierte Rutschfläche 9 zur Verfügung. Bemerkenswert ist zudem die schräge Anordnung in der Drehrichtung T, wodurch auf der schiebenden, d.h. in Drehrichtung T orientierten Seite kein Kaffeemehlstau resultiert sondern dieses nach unten abrieseln kann. Durch die Schrägstellung der davon jeweils abgewandten entgegen der Drehrichtung T orientierten Schrägseite bzw. Seitenfläche kann auch dort ankommendes Pulver nach radial außen abgleiten.

Der nicht eingezeichnete bzw. bezeichnete Konuswinkel der Rutschfläche 9 zur Drehachse D bzw. der Konuswinkel a, den die Rutschfläche 9 mit der Drehachse D (in der Zeichnung eingezeichnet in Bezug auf eine zur Drehachse D parallele Achse) einschließt, beträgt in dem gezeigten Ausführungsbeispiel etwa 50°.

Dieser Konuswinkel wird in der Zeichnung nach unten gemessen zwischen der Rutschfläche 9 und der Drehachse D - es handelt sich also um den jeweils kleinsten von der Rutschfläche 9 und der Drehachse D aufgespannten Winkel.

### Bezugszeichen

- 1: Auswerferscheibe
- 2: Oberseite
- 3: Unterseite
- 4: Axialfortsatz
- 5: Dome
- 6: Aufsitzfläche
- 7: sich in Umfangsrichtung erstreckende Kante
- 8: Randbereich
- 9: Rutschfläche
- 10: Auswerferflügel
- 11: äußere Umfangskante
- 12: Auswerferflügeloberseite
- 13: Krümmungsradius

- D: Drehachse
- T: Drehrichtung
- R: Radiale zur Drehachse D bezogen auf ein jeweiliges radial äußeres Ende eines Auswerferflügels
- α: Konuswinkel

## Patentansprüche

1. Kaffeebohnen-Mahlwerk für eine Kaffeezubereitungsvorrichtung zum Mahlen von Kaffeebohnen zu Kaffeemehl mit einem ersten und einem zweiten Mahlelement, die mittels eines Antriebs relativ zueinander um eine Drehachse (D) verdrehbar sind und mit einer eine Oberseite (2) und eine entlang der Drehachse (D) davon beabstandete Unterseite (3) aufweisenden Auswerferscheibe (1), mit der gemahlenes Kaffeemehl aus dem Kaffeebohnen-Mahlwerk austragbar ist, wobei das erste Mahlelement auf einer oberen, stirnseitigen Aufsitzfläche (6) der Auswerferscheibe (1) aufsitzt, die radial außen von einer sich in Umfangsrichtung erstreckenden Kante (7) begrenzt ist, und wobei die Auswerferscheibe (1) einen nach radial außen bis zu einer äußeren Umfangskante (11) der Auswerferscheibe (1) abfallenden Randbereich (8) aufweist, auf dem mehrere in Umfangsrichtung beabstandete Auswerferflügel (10) angeordnet sind, wobei, sich die Auswerferflügel (10) in radialer Richtung nach innen bis zu der die Aufsitzfläche (6) begrenzenden Kante (7) erstrecken, wobei eine sich von einem radial äußeren Ende bis zu einem radial inneren Ende eines jeweiligen Auswerferflügels (10) erstreckende Auswerferflügeloberseite (12) in einer Radialebene liegt, welche die sich in Umfangsrichtung erstreckenden Kante (7) aufnimmt,
**dadurch gekennzeichnet,**
**dass** sich die Auswerferflügel (10) von radial außen nach radial innen in Umfangsrichtung erstrecken, so dass ein radial äußeres Ende bei einer Drehung der Auswerferscheibe (1) einem radial inneren Ende nacheilt, und
ein radial äußeres Ende und ein radial inneres Ende eines jeweiligen Auswerferflügels (10) in Umfangsrichtung um einen Umdrehungswinkel von mindestens 5° versetzt angeordnet sind.

2. Kaffeebohnen-Mahlwerk nach Anspruch 1,
**dadurch gekennzeichnet,**
**dass** die Auswerferflügel (10) entlang der Drehachse (D) in der Radialebene enden oder sich alternativ über diese hinaus weiter nach oben erstrecken und/oder abschnittsweise, insbesondere mit einem radial äußeren Bereich unterhalb der Radialebene enden.

3. Kaffeebohnen-Mahlwerk nach einem der vorhergehenden Ansprüche, **dadurch gekennzeichnet,**
**dass** sich das erste Mahlelement radial bis zur sich in Umfangsrichtung erstreckenden Kante (7) erstreckt.

4. Kaffeebohnen-Mahlwerk nach einem der vorhergehenden Ansprüche,
**dadurch gekennzeichnet,**
**dass** die bevorzugt eine Ringfläche umfassende Aufsitzfläche (6) eine sich senkrecht zur Drehachse (D) erstreckende Radialebene bildet, die vorzugsweise nach radial außen übergangslos in die Auswerferflügel (10) übergeht

5. Kaffeebohnen-Mahlwerk nach einem der vorhergehenden Ansprüche,
**dadurch gekennzeichnet,**
**dass** der Randbereich (8) von einer einen Konuswinkel (α) mit der Drehachse (D), bevorzugt zwischen 30° und 80° aufspannenden Konusfläche gebildet ist.

6. Kaffeebohnen-Mahlwerk nach einem der vorhergehenden Ansprüche,
**dadurch gekennzeichnet,**
**dass** die Anzahl der, vorzugsweise gleichmäßig in Umfangsrichtung verteilt angeordneten, Auswerferflügel (10) kleiner gleich fünf, vorzugsweise drei, beträgt.

7. Kaffeebohnen-Mahlwerk nach einem der vorhergehenden Ansprüche,
**dadurch gekennzeichnet,**
**dass** das, vorzugsweise von einem Mahlkegel gebildete, erste Mahlelement drehfest auf der Auswerferscheibe (1) angeordnet ist, welche rotierbar von dem Antrieb antreibbar ist.

8. Kaffeebohnen-Mahlwerk nach einem der vorhergehenden Ansprüche,
**dadurch gekennzeichnet,**
**dass** sich die Auswerferflügel (10), geradlinig oder gekrümmt, von radial außen nach radial innen in Umfangsrichtung erstrecken, in einer Umdrehungsrichtung der Auswerferscheibe (1) bei Drehmomentbeaufschlagung durch den Antrieb, so dass ein radial äußeres Ende bei einer Drehung der Auswerferscheibe (1) einem radial inneren Ende nacheilt.

9. Kaffeebohnen-Mahlwerk nach Anspruch 8,
**dadurch gekennzeichnet,**
**dass** ein radial äußeres Ende und ein radial inneres Ende eines jeweiligen Auswerferflügels (10) in Umfangsrichtung um einen Umdrehungswinkel von mindestens 10° versetzt angeordnet sind.

10. Kaffeebohnen-Mahlwerk nach einem der vorhergehenden Ansprüche,
**dadurch gekennzeichnet,**
**dass** die Auswerferflügel (10) tangential zu der sich in Umfangsrichtung erstreckenden Kante (7) verlaufend angeordnet sind.

11. Kaffeebohnen-Mahlwerk nach einem der vorhergehenden Ansprüche,
**dadurch gekennzeichnet,**
**dass** oberhalb der Auswerferflügel (10), insbesondere in einem Abstand von weniger als 2mm, vorzugsweise weniger als 1 mm, eine, bevorzugt von einer Unterseite (3) des zweites Mahlelementes gebildeten, Abstreiffläche vorgesehen ist, an der etwaiges auf den Auswerferflügeln (10) befindliches Kaffeemehl abstreifbar ist.

12. Kaffeezubereitungsvorrichtung mit einem integrierten Kaffeebohnen-Mahlwerk nach einem der vorhergehenden Ansprüche, das derart angeordnet ist, dass das von der Auswerferscheibe (1) nach radial außen transportierte Kaffeemehl in Richtung zu einer Brühkammer geführt ist.

## Claims

1. A coffee bean grinder for a coffee preparation device for grinding coffee beans into ground coffee, having a first and a second grinding element that can be rotated in relation to each other about an axis of rotation (D) by means of a drive, and having an ejector disk (1) which comprises an upper side (2) and a lower side (3) that is spaced apart from the same along the axis of rotation (D), and with which disk ground coffee can be discharged from the coffee bean grinder, said first grinding element resting on an upper face-side contact surface (6) of the ejector disk (1), said contact surface being radially limited on the outside by an edge (7) extending in the circumferential direction, and the ejector disk (1) comprising a peripheral region (8) that is sloped to the outside with respect to the radial extension up to an outer circumferential edge (11) of the ejector disk (1), multiple ejector wings (10) that are spaced apart from one another in the circumferential direction being arranged on said peripheral region, said ejector wings (10) extending in the radial direction towards the inside up to the edge (7) limiting the contact surface (6), an ejector wing upper side (12) extending from a radially outer end up to a radially inner end of a respective ejector wing (10) being located in a radial plane that receives the edge (7) extending in the circumferential direction,
**characterised in that**
the ejector wings (10) extend in the circumferential direction from the outside to the inside with respect to the radial extension, in such a way that a radially outer end lags behind a radially inner end when the ejector disk (1) is being rotated, and
**in that** a radially outer end and a radially inner end of a respective ejector wing (10) are arranged so as to be offset by a rotational angle of at least 5° in the circumferential direction.

2. The coffee bean grinder according to claim 1,
**characterised in that**
the ejector wings (10), along the axis of rotation (D), end in the radial plane or alternatively extend beyond said radial plane further upwards and/or end below the radial plane in some sections, in particular with a radially outer region.

3. The coffee bean grinder according to any one of the preceding claims,
**characterised in that**
the first grinding element radially extends up to the edge (7) extending in the circumferential direction.

4. The coffee bean grinder according to any one of the preceding claims,
**characterised in that**
the contact surface (6), which preferably comprises an annular surface, forms a radial plane that extends vertically with respect to the axis of rotation (D) and that preferably passes, radially to the outside, seamlessly into the ejector wings (10).

5. The coffee bean grinder according to any one of the preceding claims,
**characterised in that**
the peripheral region (8) is formed by a conical surface spanning a cone angle (α) with the axis of rotation (D), preferably between 30° and 80°.

6. The coffee bean grinder according to any one of the preceding claims,
**characterised in that**
the number of the ejector wings (10), which are preferably arranged so as to be evenly distributed in the circumferential direction, is less than or equal to five, preferably three.

7. The coffee bean grinder according to any one of the preceding claims,
**characterised in that**
the first grinding element, which is preferably formed by a grinding cone, is arranged on the ejector disk (1) in a rotationally fixed manner, which ejector disk can rotatably be driven by the drive.

8. The coffee bean grinder according to any one of the preceding claims,
**characterised in that**
the ejector wings (10) extend in the circumferential direction, either straight or curved, from the outside to the inside with respect to the radial extension, in a rotational direction of the ejector disk (1) when it is subjected to torque by the drive, such that a radially outer end lags behind a radially inner end when the ejector disk (1) is being rotated.

9. The coffee bean grinder according to claim 8,
**characterised in that**
a radially outer end and a radially inner end of a respective ejector wing (10) are arranged so as to be offset, in the circumferential direction, by a rotational angle of at least 10°.

10. The coffee bean grinder according to any one of the preceding claims,
**characterised in that**
the ejector wings (10) are arranged so as to run tangentially to the edge (7) extending in the circumferential direction.

11. The coffee bean grinder according to any one of the preceding claims,
**characterised in that**
above the ejector wings (10), in particular at a distance of less than 2 mm, preferably less than 1 mm, a scraper surface is provided, which is preferably formed by a lower side (3) of the second grinding element, and at which any ground coffee can be scraped off from the ejector wings (10).

12. A coffee preparation device having an integrated coffee bean grinder according to any one of the preceding claims, said grinder being arranged in such a way that the ground coffee that is transported from the ejector disk (1) to the outside with respect to the radial extension is guided in the direction of a brewing chamber.

## Revendications

1. Broyeur de grains de café pour un dispositif de préparation de café pour moudre des grains de café pour obtenir du café moulu, ayant un premier et un deuxième élément de broyage qui peuvent être tordus l'un par rapport à l'autre autour d'un axe de rotation (D) au moyen d'un entraînement, et ayant un disque d'éjection (1) présentant un côté supérieur (2) et un côté inférieur (3) espacé dudit côté supérieur le long de l'axe de rotation (D), du café moulu pouvant être extrait du broyeur de grains de café, dans lequel ledit premier élément de broyage repose sur une surface d'appui (6) supérieure sur le côté frontal du disque d'éjection (1), ladite surface étant limitée radialement à l'extérieur d'un bord (7) qui s'étend dans la direction circonférentielle, et dans lequel le disque d'éjection (1) présente une zone de bordure (8) inclinée vers l'extérieur dans le sens radial jusqu'à un bord périphérique (11) extérieur du disque d'éjection (1), plusieurs ailes d'éjection (10) qui sont espacées dans la direction circonférentielle étant disposées sur ladite zone de bordure, dans lequel les ailes d'éjection (10) s'étendent dans la direction radiale vers l'intérieur jusqu'au bord (7) qui limite la surface d'appui (6), dans lequel un côté supérieur d'une aile d'éjection (12) qui s'étend d'une extrémité radialement extérieure jusqu'à une extrémité radialement intérieure d'une aile d'éjection (10) respective est situé dans un plan radial qui reçoit le bord (7) s'étendant dans la direction circonférentielle,
**caractérisé en ce que**
les ailes d'éjection (10) s'étendent dans la direction circonférentielle de l'extérieur vers l'intérieur dans le sens radial, de façon qu'une extrémité radialement extérieure est en retard par rapport à une extrémité radialement intérieure lors d'une rotation du disque d'éjection (1), et
**en ce qu'**une extrémité radialement extérieure et une extrémité radialement intérieure d'une aile d'éjection (10) respective sont disposées en décalé dans la direction circonférentielle d'un angle de rotation d'au moins 5°.

2. Broyeur de grains de café selon la revendication 1, **caractérisé en ce que**
les ailes d'éjection (10) se terminent dans le plan radial le long de l'axe de rotation (D) ou s'étendent en alternative au-delà du plan radial encore plus vers le haut et/ou se terminent au-dessous du plan radial par sections, notamment avec une région radialement extérieure.

3. Broyeur de grains de café selon l'une quelconque des revendications précédentes,
**caractérisé en ce que**
le premier élément de broyage s'étend radialement jusqu'au bord (7) qui s'étend dans la direction circonférentielle.

4. Broyeur de grains de café selon l'une quelconque des revendications précédentes,
**caractérisé en ce que**
la surface d'appui (6) qui de préférence comprend une surface annulaire forme un plan radial qui s'étend perpendiculairement à l'axe de rotation (D) et qui passe, de préférence, vers l'extérieur dans le sens radial, dans les ailes d'éjection (10) sans transition.

5. Broyeur de grains de café selon l'une quelconque des revendications précédentes,
**caractérisé en ce que**
la zone de bordure (8) est formée par une surface conique qui définit un angle conique (α) avec l'axe de rotation (D), de préférence entre 30° et 80°.

6. Broyeur de grains de café selon l'une quelconque des revendications précédentes,
**caractérisé en ce que**
le nombre des ailes d'éjection (10) qui sont disposées, de préférence, régulièrement dans la direction circonférentielle est inférieur ou égal à cinq, de préférence trois.

7. Broyeur de grains de café selon l'une quelconque des revendications précédentes,
**caractérisé en ce que**
le premier élément de broyage qui est de préférence formé par un cône de broyage est disposé sur le disque d'éjection (1) de manière solidaire en rotation, ledit disque pouvant être entraîné en rotation par l'entraînement.

8. Broyeur de grains de café selon l'une quelconque des revendications précédentes,
**caractérisé en ce que**
les ailes d'éjection (10) s'étendent dans la direction circonférentielle, de manière rectiligne ou courbée, de l'extérieur vers l'intérieur dans le sens radial, dans une direction de rotation du disque d'éjection (1) lors d'une application d'un couple par l'entraînement, de façon qu'une extrémité radialement extérieure est en retard par rapport à une extrémité radialement intérieure lors d'une rotation du disque d'éjection (1).

9. Broyeur de grains de café selon la revendication 8, **caractérisé en ce qu'**
une extrémité radialement extérieure et une extrémité radialement intérieure d'une aile d'éjection (10) respective sont disposées en décalé d'un angle de rotation d'au moins 10° dans la direction circonférentielle.

10. Broyeur de grains de café selon l'une quelconque des revendications précédentes,
**caractérisé en ce que**
les ailes d'éjection (10) sont disposées de manière à s'étendre tangentiellement par rapport au bord (7) qui s'étend dans la direction circonférentielle.

11. Broyeur de grains de café selon l'une quelconque des revendications précédentes,
**caractérisé en ce qu'**
au-dessus des ailes d'éjection (10), notamment à une distance inférieure à 2 mm, de préférence inférieure à 1 mm, une surface racleur est prévue qui est de préférence formée par un côté inférieur (3) du deuxième élément de broyage, du café moulu qui est éventuellement présent sur les ailes d'éjection (10) pouvant être raclé à ladite surface.

12. Dispositif de préparation de café ayant un broyeur de grains de café intégré selon l'une quelconque des revendications précédentes, ledit broyeur étant disposé de telle façon que le café moulu qui est transporté par le disque d'éjection (1) vers l'extérieur dans le sens radial est guidé dans la direction d'une chambre de percolation.
